# FASCICULE DE BREVET EUROPEEN

(11) **EP 1 349 738 B1**
(45) Date de publication et mention de la délivrance du brevet: **15.11.2006**
(21) Numéro de dépôt: 01271289.9
(22) Date de dépôt: 12.12.2001
(51) Int. Cl.: B60C 27/06, B60C 27/08

(54) **BANDE UNIVERSELLE A ELEMENTS EN TOLE ET CAOUTCHOUC POUR TOUS VEHICULES ET SOLS**
MEHRZWECKLAUFFLÄCHE MIT GLEITSCHUTZELEMENTEN AUS BLECH UND KAUTSCHUK FÜR ALLE FAHRZEUG- UND OBERFLÄCHENARTEN
MULTIPURPOSE TREAD WITH ANTISKID ELEMENTS MADE OF METAL AND RUBBER FOR ALL TYPES OF VEHICLES AND SURFACES

(30) Priorité: 20.12.2000 FR 0016630; 19.04.2001 FR 0105309
(43) Date de publication de la demande: 08.10.2003
(73) Titulaire: Moutot S.A.S., 69530 Brignais (FR)
(72) Inventeur: Guidet, Pierre, 69160 Tassin la Demi-Lune (FR)
(74) Mandataire: Schmitt, John
(86) Numéro de dépôt international: PCT/FR2001/003951
(87) Numéro de publication internationale: WO 2002/049860

(56) Documents cités:
- FR-A- 2 088 508
- US-A- 1 412 344

## Description

L'invention présente concerne le domaine des dispositifs anti-dérapants pouvant équiper l'ensemble des pneumatiques, pour circuler aussi bien sur une chaussée dégagée, sur la neige, sur la glace, sur le sable, que sur des sols agraires ou forestiers.

Un dispositif anti-dérapant correspondant au préambule de la revendication 1 est divulgué dans le document FR-2088508.

Les systèmes existants accumulent de nombreux inconvénients au regard de la réglementation de la circulation et des conditions pratiques d'utilisation ; la bande universelle à éléments proposée apporte des solutions efficaces et fiables à tous les aspects du problème. Dans sa conception d'ensemble, elle se compose de tôles de liaison ou éléments, inclinées par rapport à l'axe de la roue, recouvrant la surface de roulement et une partie des flancs. Elles comportent une boucle à chaque extrémité ce qui permet à un câble gainé de les relier toutes sur chaque flanc du pneu. Ces tôles sont enrobées dans un caoutchouc « chargé » surmoulé, quadrillé, sauf dans leurs extrémités ; elles reçoivent deux zones anti-dérapantes correspondant aux bords du pneu sur la surface de roulement ; compte-tenu de l'excellent coefficient de frottement caoutchouc « chargé » quadrillé / caoutchouc pneu sculpté et de la grande surface de contact des tôles de liaison sur le pneu, l'effort transmis aux câbles latéraux est considérablement réduit et le glissement relatif pratiquement nul. Le coefficient de frottement peut encore être amélioré en réalisant des ventouses avec le caoutchouc surmoulé sous les tôles de liaison. Le caoutchouc surmoulé a une « dureté shore » suffisante pour assurer un bon maintien du véhicule équipé ; il reçoit en surface des sculptures appropriées, concentriques, qui garantissent un bon coefficient de frottement au roulement sur les sols durs tels que route, glace, roche, en plus des zones anti-dérapantes. Toutes les tôles-éléments ont mêmes dimensions et sont fixées sur les deux câbles latéraux dont elles sont solidaires, grâce aux boucles recevant un pliage incurvé, ce qui autorise la fixation sur les câbles dégainés localement, sans que les bords de tôles ne détériorent la gaine des câbles. Des barrettes anti-torsion relient les tôles de liaison deux à deux.

Selon une réalisation pratique de l'invention, les zones anti-dérapantes s'obtiennent en introduisant dans le caoutchouc « chargé » au moment du surmoulage, des grains durs, rugueux, naturels ou artificiels. Une conception plus élaborée consiste en grains de synthèse de formes losangique, pyramidale ou en tétrapode. Ces grains sont répartis et retenus dans toute l'épaisseur du caoutchouc sur les tôles dans les zones prévues. Une variante consiste à fixer les grains avec une colle ou une résine époxy pour constituer d'abord les zones anti-dérapantes, puis le surmoulage du caoutchouc autour de ces zones. On pourra moduler la grosseur des grains, leur dureté, leur nombre par unité de volume, en fonction des applications. Il convient de retenir deux grosseurs de grains : 1,5 et 3 mm pour la version « voitures particulières », de même : 2 et 4 mm pour la version « Bus et Poids lourds ».

Les tôles sont montées parallèlement entre elles à une distance caractéristique : le « pas », qui varie en fonction des applications et des conditions d'utilisations pratiques. Aux extrémités de la bande, on prévoit quelques tôles mobiles sur les câbles dans la zone de réglage ; pour celles-ci, le blocage sur les câbles se fait avec un écrou cylindrique soudé et une vis à bout plat. Leur nombre varie avec la longueur de réglage désirée qui s'obtient aux deux extrémités des câbles, recevant un ergot qui se déplace chacun dans un tube avec une ouverture longitudinale et des encoches latérales. Les deux tubes pour les extrémités de chaque câble latéral sont solidaires, l'un d'un crochet, l'autre de son logement. Seul le crochet du câble latéral « avant » est légèrement différent : il est enrobé d'une matière souple à faible rémanence, qui confère à cette bande universelle une souplesse en harmonie avec celle des pneumatiques. L'ensemble peut donc se déformer sans distorsion et sans glissement relatif.

Un autre objet de l'invention vise à proposer un nouveau dispositif permettant de circuler sur toutes sortes de sols avec tous types de véhicules.

Un autre objet de l'invention est de proposer un nouveau dispositif qui se présente comme une bande universelle pouvant se monter sur des roues de diamètres et de largeurs différents.

D'autres aspects de l'invention apparaissent dans la description et les dessins annexés à titre purement explicatif et non limitatif :

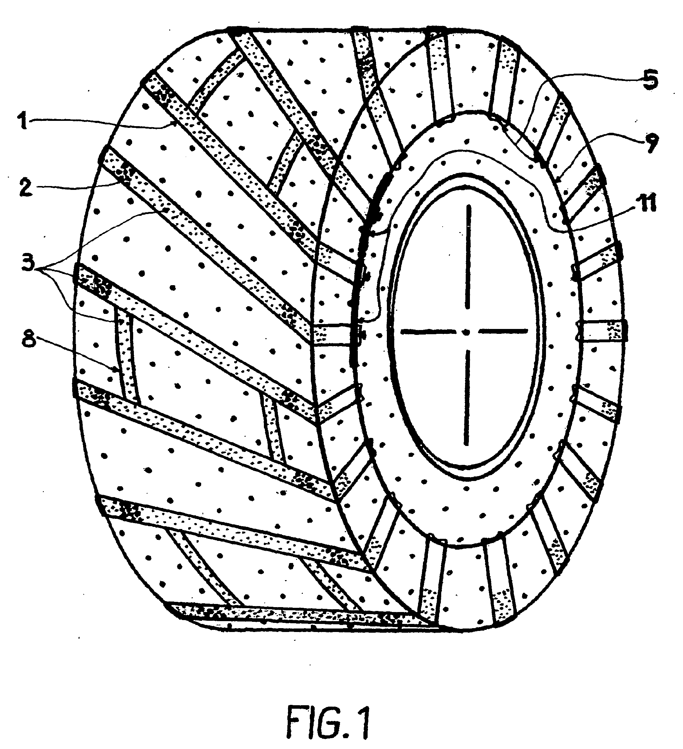

- la figure 1 montre en perspective la bande universelle montée sur une roue de véhicule.
- La figure 2 montre les détails de la bande vue en plan.

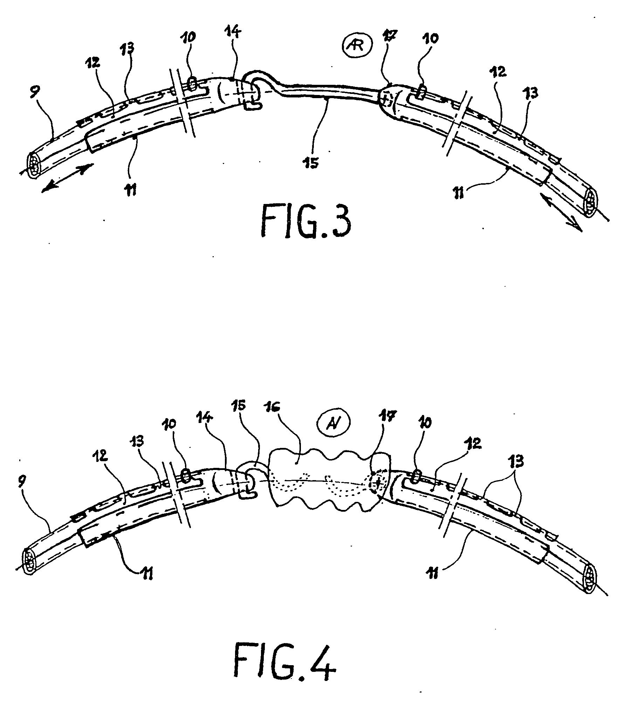

- Les figures 3 et 4 montrent les détails de la fermeture et des réglages en extrémités des câbles, respectivement pour le câble latéral « arrière » et pour le câble latéral « avant ».

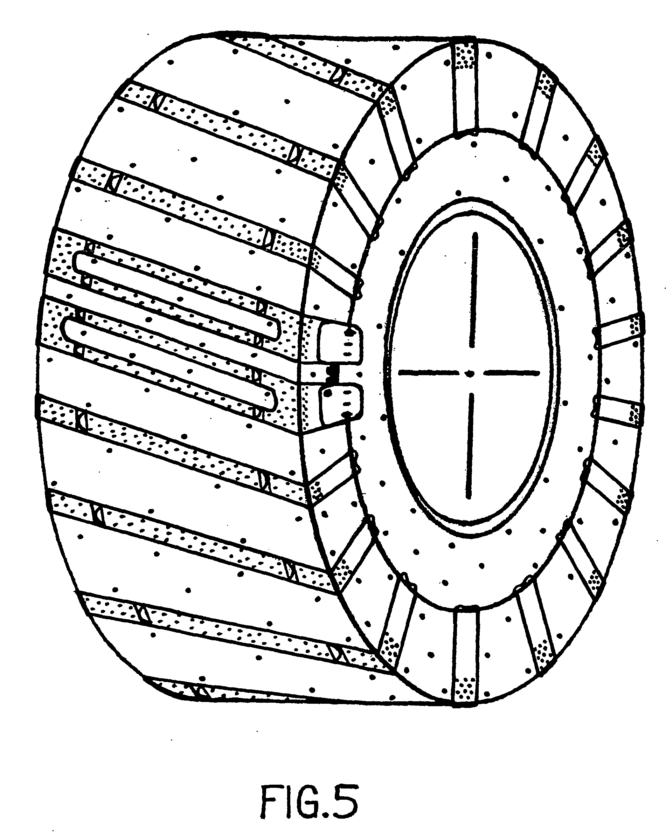

- La figure 5 présente une autre réalisation avec tôle de fermeture comportant un système : pignon - crémaillère - verrouillage.

Les figures annexées concrétisent la conception de cette bande universelle à éléments 1, lesquels reçoivent des zones anti-dérapantes 2 pour les sols durs, glissants, tels que la roche ou la glace, et des zones caoutchoutées 3 qui jouent le rôle de crampons sur les sols tendres tels que neige, sable, terre mais aussi sur les sols durs rugueux, comme les chaussées. L'inclinaison des éléments 1 intervient pour le confort et la continuité de l'action ; elle varie de 30° pour la version « Bus et Poids lourds » à 60° environ pour la version « voitures particulières ». Les éléments 1 sont réalisés en acier inoxydable ou traité éventuellement en plastique souple et résistant pour les véhicules les plus légers. En cas de détérioration, ces éléments 1 seront facilement interchangeables. Le « pas » variable de montage de ces éléments 1 ajoute une souplesse remarquable d'adaptation et de généralisation à tous les types de véhicules. Les tôles éléments 1 comportent un pliage incurvé dans leurs extrémités pour la confection des boucles 5, qui prennent appui sur les deux câbles latéraux 9, dégainés à cet effet au droit des boucles 5. Ainsi, ces tôles 1 et les câbles 9 sont solidaires sans système de fixation ; de plus les bords relevés des boucles ne détériorent pas la gaine plastique des câbles.

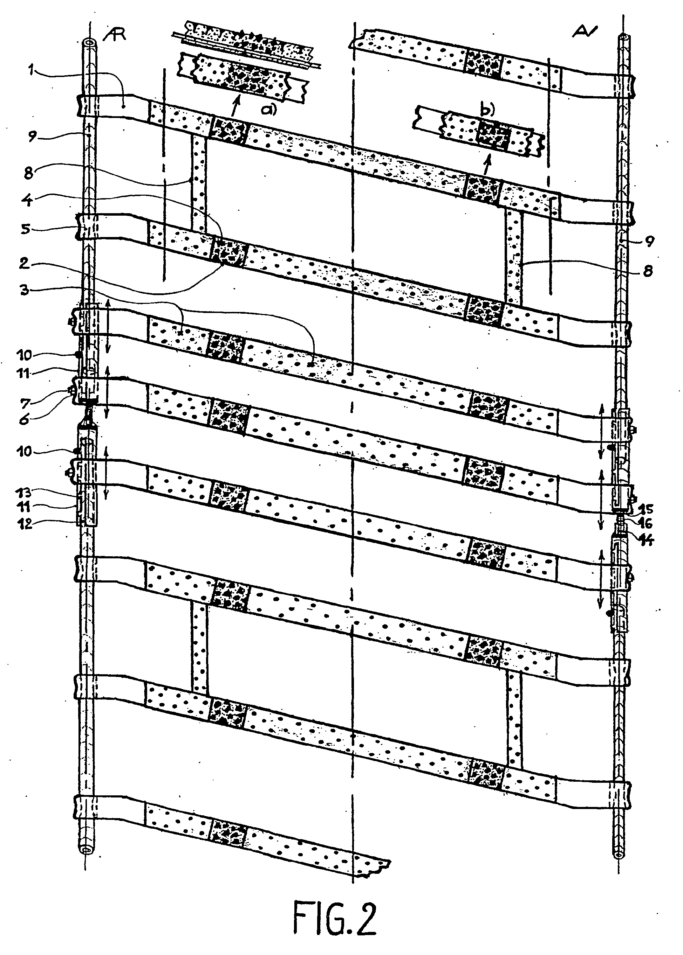

Les zones anti-dérapantes 2 se composent de grains 4 rugueux, durs, naturels ou artificiels, de deux grosseurs différentes par version, noyés dans le caoutchouc surmoulé, chargé, et quadrillé (Figure 2a) ou dans une colle ou résine appropriées (Figure 2b). Cette nouvelle technologie permet aux zones 2 de s'user simultanément avec le caoutchouc et de garder intacte leur propriété antidérapante par le renouvellement des grains usés.

En extrémité de bande, les éléments 1 sont mobiles sur les câbles 9 ; leur blocage se fait grâce à un écrou cylindrique soudé 6 et à une vis à bout plat 7, positionnés sur les boucles 5 et prenant appui sur la gaine des câbles 9. Cette solution permet de régler la valeur du « pas » dans cette zone en fonction de la position de sortie des câbles 9 hors de leurs tubes de réglage 11. La tête de vis est plate, moletée, pour action manuelle rapide, dans le cas où le montage de cette bande doit se faire sur des roues de largeurs ou de diamètres différents. Avantageusement, les boucles 5 des éléments 1 mobiles ne seront pas complètement fermées pour faciliter le déplacement des câbles 9 avec ergots 10 dans leurs tubes de réglage 11. Elles reçoivent aussi un pliage incurvé en extrémités. Tous les éléments 1 fixes sont reliés par soudures deux à deux au moyen de deux barrettes anti-torsion 8, avant d'opérer le surmoulage caoutchouc ; elles sont également enrobées avec les éléments 1.

Les éléments 1 mobiles quand ils sont au moins quatre ou plus, sont également reliés par barrettes 8, sauf pour deux d'entre eux. Toutefois si l'on désire pouvoir monter cette bande sans soulever le véhicule, il est indispensable que tous les éléments 1 mobiles ne soient pas reliés par barrettes 8, sinon de les démonter avant montage de la bande sur le pneu, puis remontage ensuite.

Les câbles latéraux 9 « arrière » et « avant » sont en acier inoxydable gainé ; ils sont munis à chacune de leurs extrémités d'un ergot 10 qui pénètre dans un tube de réglage 11, tous identiques. Ces 4 tubes 11 comportent une ouverture longitudinale 12 avec encoches latérales 13 réparties régulièrement tous les centimètres environ, ce qui correspond aux différentes positions de l'ergot 10 en extrémité des câbles 9. Le diamètre extérieur des câbles s'harmonise avec le diamètre intérieur des tubes de réglage 11. Les longueurs de réglage des tubes 11 à l'avant et à l'arrière autorisent le montage d'une bande sur des roues de diamètres et de largeurs très différents, d'où l'intérêt majeur de cette bande universelle de conception souple, simple, de faible prix de revient. Deux tubes 11 possèdent une extrémité en forme de logements 14 pour crochet 15, lesquels se fixent à l'extrémité des deux autres tubes 11. Le crochet 15 « avant » est noyé dans une matière souple sans rémanence 16, afin de compléter l'élasticité du système de tension de la bande. Tous les tubes 11 sont cintrés au rayon moyen des roues pour lesquelles leur montage est prévu.

Le montage de cette bande se fait toujours à domicile avant de voyager, ou sur une place de parking au sec, contrairement aux systèmes existants.

La fabrication de cette bande se fait en deux versions : version « voitures particulières » et version « bus et poids lourds » qui peuvent s'étendre à tous les autres véhicules par simple adaptation ; il s'agit donc bien d'une bande universelle dans tous les sens du mot.

Dans la version « bus et poids lourds » pour roues jumelées : on exécute en plus des barrettes 8, un pliage en V sur les tôles de liaison 1, entre les deux roues ; un câble anti-torsion passe au fond du V de chaque tôle 1.

De nombreuses variantes sont concevables pour les crochets 15, ainsi que pour leurs logements 14 et leurs attaches 17. Les tôles 1 ont une même inclinaison à gauche ou à droite ; à titre indicatif il est possible qu'une paire de bandes comporte une inclinaison à gauche pour l'une et une inclinaison à droite pour l'autre. Les câbles latéraux 9 peuvent être en deux parties avec un tube de réglage intermédiaire 11 en plus, pour la version « voitures particulières » ; selon une autre réalisation dans la version « bus et poids lourds », le tube de réglage 11 est remplacé par un boîtier enrouleur pour chaque câble latéral 9.

## Revendications

1. Bande universelle à éléments (1) pour tous véhicules et sols, comprenant dans sa partie courante des éléments (1), inclinés par rapport à l'axe de la roue, recouvrant la bande de roulement et une partie des flancs du pneu, **caractérisée en ce que** les éléments (1) de ladite bande ont une même inclinaison à gauche ou à droite ; à titre indicatif, il est possible qu' une paire de bandes comporte une inclinaison à gauche pour l'une et une inclinaison à droite pour l'autre, les éléments (1) sont en tôle et sont facilement interchangeables ; ils comportent des zones anti-dérapantes (2) pour sols durs glissants et des zones caoutchoutées (3) pour sols tendres ou durs rugueux, comme les chaussées ; les éléments (1) sont terminés par des boucles (5), permettant à deux câbles latéraux (9) de les relier, et les-dits câbles latéraux (9) étant munis d'un ergot (10) à chaque extrémité qui pénètre dans un tube de réglage 11.

2. Bande suivant la revendication 1, **caractérisée en ce que** les éléments (1) sont en acier inoxydable ou traité, éventuellement en plastique souple et résistant pour les véhicules les plus légers.

3. Bande suivant la revendication 1, **caractérisée en ce que** les éléments (1) ont mêmes dimensions et sont fixés sur les deux câbles latéraux (9) dégainés localement, dont ils sont solidaires grâce aux boucles (5) recevant un pliage incurvé.

4. Bande suivant la revendication 1, **caractérisée en ce que** les éléments (1) sont reliés par soudures deux à deux au moyen de deux barrettes anti-torsion (8) avant d'opérer le surmoulage caoutchouc ; elles sont également enrobées avec les éléments (1).

5. Bande suivant la revendication 1, **caractérisée en ce qu'**en extrémités, les éléments (1) sont mobiles sur les câbles (9); leur blocage se fait grâce à un écrou cylindrique soudé (6) et à une vis à bout plat (7), positionnés sur les boucles (5) et prenant appui sur la gaine des câbles (9); avantageusement les boucles (5) ne sont pas complètement fermées pour faciliter le déplacement des câbles (9) avec ergots (10) dans leurs tubes de réglage (11).

6. Bande suivant la revendication 1, **caractérisée en ce que** les éléments (1) mobiles, quand ils sont au moins quatre ou plus, sont également reliés par barrettes (8), sauf pour deux d'entre eux.

7. Bande suivant la revendication 1, **caractérisée en ce que** les zones anti-dérapantes (2) se composent de grains (4) rugueux, durs, naturels ou artificiels, de deux grosseurs différentes par version : 1,5 et 3 mm pour la version « voitures particulières » et 2 et 4 mm pour la version « bus et poids lourds » ; les grains sont noyés dans le caoutchouc surmoulé « chargé » et quadrillé (figure 2a), ou dans une colle ou résine appropriées (figure 2b) ; une conception plus élaborée consiste en grains de synthèse de forme losangique, pyramidale ou en tétrapode, répartis et retenus dans toute l'épaisseur du caoutchouc.

8. Bande suivant la revendication 1, **caractérisée en ce que** les éléments (1) sont montés parallèlement entre eux à une distance caractéristique, le « pas », qui varie en fonction des applications et des conditions d'utilisation pratiques.

9. Bande suivant la revendication 1, **caractérisée en ce que** les zones caoutchoutées (3) sont constituées de caoutchouc surmoulé ayant une « dureté Shore » suffisante pour assurer un bon maintien du véhicule équipé ; le caoutchouc surmoulé reçoit en surface des sculptures concentriques qui garantissent un bon coefficient de frottement au roulement ; le coefficient de frottement est amélioré en réalisant des ventouses avec le caoutchouc sous les tôles de liaison ou éléments (1).

10. Bande suivant la revendication 1, **caractérisée en ce que** les câbles latéraux (9) « arrière » et « avant » sont en acier inoxydable gainé ; ils sont munis à chacune de leurs extrémités d'un ergot (10) qui pénètre dans un tube de réglage (11) ; ces quatre tubes (11) comportent une ouverture longitudinale (12) avec des encoches latérales (13) réparties régulièrement ; ils sont cintrés au rayon moyen des roues pour lesquelles leur montage est prévu ; les câbles (9) peuvent être en deux parties avec un tube de réglage intermédiaire (11) en plus, pour la version « voitures particulières » ; selon une autre réalisation dans la version « bus et poids lourds », le tube de réglage 11 est remplacé par un boitier enrouleur pour chaque câble latéral (9) dans le cas de roues jumelées, on exécute en plus des barrettes (8), un pliage en V sur les tôles de liaison (1), entre les deux roues ; un cable anti-torsion passe au fond du V de chaque tôle (1).

11. Bande suivant la revendication 1, **caractérisée en ce que** le diamètre extérieur des câbles (9) s'harmonise avec le diamètre intérieur des tubes (11) dont les longueurs de réglage à l'avant et à l'arrière autorisent le montage sur des roues de diamètres et de largeurs très différents.

12. Bande suivant les revendications 1, 10 ou 11, **caractérisée en ce que** deux tubes (11) possèdent une extrémité en forme de logement (14) pour crochets (15), lesquels se fixent à l'extrémité des deux autres tubes (11), le crochet (15) « avant » est noyé dans une matière souple non rémanente (16).

13. Bande suivant la revendication 1, **caractérisée en ce que** les éléments (1) sont enrobés dans un caoutchouc « chargé » surmoulé, quadrillé, sauf dans leurs extrémités.

## Claims

1. Multipurpose tread with elements (1) for all types of vehicles and surfaces, comprising in its standard section elements (1) that are tilted in relation to the axis of the wheel, covering the tyre tread and a part of the tyre walls, **characterised in that** the elements (1) of said tread have the same inclination to the left and to the right; it is possible, for example, for a pair of treads to have an inclination to the left for one and an inclination to the right for the other; the elements (1) are made from sheet metal and are easily interchangeable; they comprise non-skid areas (2) for hard slippery surfaces and rubber areas (3) for soft or rugged surfaces, such as streets; the elements (1) end in buckles (5) that allow two lateral cables (9) to link them, said lateral cables (9) being equipped with a lug (10) at either end, which is inserted in an adjustment tube (11).

2. Tread according to claim 1, **characterised in that** the elements (1) are made from treated or stainless steel, and possibly from flexible, resistant plastic for the lighter vehicles.

3. Tread according to claim 1, **characterised in that** the elements (1) have the same dimensions and are fixed to the two locally stripped lateral cables (9), to which they are connected by means of the buckles (5), which are bent into a curve.

4. Tread according to claim 1, **characterised in that** the elements (1) are linked two-by-two with joins provided by two anti-torsion tread lugs (8) before they are overmoulded with rubber; they are also covered with the elements (1).

5. Tread according to claim 1, **characterised in that**, at the ends, the elements (1) are mobile on the cables (9); they are blocked by means of a welded cylindrical nut (6) and a flat-point screw (7), positioned on the buckles (5) and resting against the sheath of the cables (9); the buckles (5), advantageously, are not completely closed to as to facilitate the movement of the cables (9) with lugs (10) inside their adjustment tubes (11).

6. Tread according to claim 1, **characterised in that** the mobile elements (1), when there are four or more of them, are also connected by tread lugs (8), except for two of them.

7. Tread according to claim 1, **characterised in that** the non-skid areas (2) consist of grains (4) that are rough, hard, natural or artificial, with two different thicknesses per version: 1.5 and 3 mm for the "private car" version and 2 and 4 mm for the "bus and HGV" version; the grains are embedded in the overmoulded "loaded" rubber with a grid (figure 2a), or in a suitable glue or resin (figure 2b); a more elaborate design consists of synthetic grains which can be diamond-, pyramid- or tetrapod-shaped, distributed and supported throughout the entire thickness of the rubber.

8. Tread according to claim 1, **characterised in that** the elements (1) are mounted parallel to each other at a characteristic distance, and their "pitch" varies according to the applications and practical conditions of use.

9. Tread according to claim 1, **characterised in that** the rubberised areas (3) are made up of overmoulded rubber with a "Shore hardness" that is sufficient to ensure the proper stability of the loaded vehicle; the overmoulded rubber receives concentric sculptures on its surface that guarantee a good coefficient of rolling friction; the friction coefficient is improved by making suction pads with the rubber under the linking plates or elements (1).

10. Tread according to claim 1, **characterised in that** the "rear" and "front" lateral cables (9) are made from sheathed stainless-steel; each of them is equipped on its end with a lug (10) which is inserted in an adjustment tube (11); these four tubes (11) comprise a longitudinal opening (12) with evenly distributed lateral notches (13); they are bent according to the average radius of the wheels on which they are intended to be installed; the cables (9) can be in two parts with an additional intermediate adjustment tube (11) for the "private car" version; according to another embodiment, in the "bus and HGV" version, the adjustment tube (11) is replaced with a winding case for each lateral cable (9); in the case of double wheels, in addition to the tread lugs (8), a V-shaped fold is made in the linking plates (1) between the two wheels; an anti-torsion cable passes under the V of each plate (1).

11. Tread according to claim 1, **characterised in that** the outer diameter of the cables (9) matches the inner diameter of the tubes (11), whose front and rear lengths of adjustment allow them to be installed on wheels with very different diameters and widths.

12. Tread according to claims 1, 10 or 11, **characterised in that** two tubes (11) have an end in the shape of a housing (14) for hooks (15), which are fixed to the end of the other two tubes (11), the "front" hook (15) being embedded in a non-residual flexible material (16).

13. Tread according to claim 1, **characterised in that** the elements (1) are surrounded with an overmoulded "loaded" rubber, which has a grid, except at their ends.

## Patentansprüche

1. Universallauffläche mit Elementen (1) für alle Fahrzeuge und Böden, die in ihrem laufenden Teil gegenüber der Radachse geneigte Elemente (1) umfaßt, die die Lauffläche und einen Teil der Reifenflanken (1) abdecken, **dadurch gekennzeichnet, daß** die Elemente (1) der besagten Lauffläche eine gleiche Neigung links oder rechts haben; Als Anhaltswert ist es möglich, daß bei einem Paar Laufflächen die eine die Neigung links und die andere die Neigung rechts hat. Die Elemente (1) sind aus Blech und leicht vertauschbar; Sie haben Gleitschutzzonen (2) für harte glatte Böden und mit Gummi versehene Zonen (3) für weiche oder harte rauhe Böden, wie auf Landstraßen; Die Elemente (1) werden durch Schnallen (5) abgeschlossen, damit zwei seitliche Kabel (9) sie verbinden können, wobei die besagten seitlichen Kabel (9), die an jedem Ende mit einem Zuhaltungshaken (10) versehen sind, der in ein Regelrohr (11) eintritt, verbunden werden können.

2. Lauffläche nach Anspruch 1, **dadurch gekennzeichnet, daß** die Elemente (1) aus Edelstahl bestehen oder bearbeitet sind, und bei den leichtesten Fahrzeugen eventuell aus geschmeidigem und widerstandsfähigem Kunststoff bestehen.

3. Lauffläche nach Anspruch 1, **dadurch gekennzeichnet, daß** die Elemente (1) die gleichen Abmessungen haben und auf den beiden seitlichen Kabeln (9) befestigt sind, die örtlich abisoliert sind, mit denen sie durch die Schnallen (5) fest verbunden sind, die eine einwärts gekrümmte Falzung aufnehmen.

4. Lauffläche nach Anspruch 1, **dadurch gekennzeichnet, daß** die Elemente (1) durch Schweißnähte jeweils zu zweit vermittels von zwei drallfreien Stäben (8) verbunden sind, bevor sie mit Kautschuk abgeformt werden; Sie sind auch mit den Elementen (1) ummantelt.

5. Lauffläche nach Anspruch 1, **dadurch gekennzeichnet, daß** die Elemente (1) an den Enden auf den Kabeln (9) beweglich sind; Sie werden mit einer geschweißten Rundmutter (6) und einer Schraube mit flachem Ende (7) blockiert, die auf den Schnallen (5) positioniert und auf dem Mantel der Kabel (9) abgestützt sind. Vorteilhafterweise sind die Schnallen (5) nicht vollständig geschlossen, damit die Verschiebung der Kabel (9) mit Zuhaltungshaken (10) in ihren Regelrohren (11) vereinfacht wird.

6. Lauffläche nach Anspruch 1, **dadurch gekennzeichnet, daß** die beweglichen Elemente (1), wenn es mindestens vier oder mehr sind, mit Ausnahme von zwei Stück, ebenfalls durch Stäbe (8) verbunden sind.

7. Lauffläche nach Anspruch 1, **dadurch gekennzeichnet, daß** die Gleitschutzzonen (2) aus rauhen, natürlichen oder künstlichen, Körnern (4) in pro Version zwei verschiedenen Größen zusammengesetzt sind: 1,5 und 3 mm für die Version "Personenwagen" und 2 und 4 mm für die Version "Bus und LKW". Die Körner sind in den abgeformten "belasteten" und karierten (Figur 2a) Kautschuk ausgegossen oder in einem geeigneten Kleber oder Harz (Figur 2b). Bei einer anspruchsvolleren Konzeption sind es Synthesekörner in Rauten-, Pyramiden- oder Tetrapodenform, die in der gesamten Dicke des Kautschuks verteilt und festgehalten werden.

8. Lauffläche nach Anspruch 1, **dadurch gekennzeichnet, daß** die Elemente (1) parallel zueinander in kennzeichnender Entfernung montiert sind, dem "Schritt", der je nach den Anwendungen und den praktischen Benutzungsbedingungen unterschiedlich ist.

9. Lauffläche nach Anspruch 1, **dadurch gekennzeichnet, daß** die mit Kautschuk versehenen Zonen (3) aus abgeformtem Kautschuk mit ausreichender "Shore-Härte" bestehen, daß die gute Haltung des ausgerüsteten Fahrzeugs gesichert ist. Der abgeformte Kautschuk bekommt an der Oberfläche konzentrische Profile, die einen guten Reibungskoeffizient beim Lauf garantieren. Der Reibungskoeffizient wird verbessert, wenn Saugnäpfe mit dem Kautschuk unter den Verbindungsblechen oder Elementen (1) ausgeführt werden.

10. Lauffläche nach Anspruch 1, **dadurch gekennzeichnet, daß** die seitlichen Kabel (9) "hinten" und "vorne" aus ummanteltem Edelstahl bestehen; Sie sind an ihren beiden Enden mit einem Zuhaltungshaken (10) versehen, der in ein Regelrohr (11) eintritt. Diese vier Rohre (11) haben eine Längsöffnung (12) mit gleichmäßig verteilten seitlichen Kerben (13). Sie sind mit dem durchschnittlichen Radius der Räder gebogen, auf die sie montiert werden sollen. Die Kabel (9) können bei der Version "Personenwagen" aus zwei Teilen bestehen mit außerdem einem dazwischen liegenden Regelrohr (11). Nach einer anderen Ausführung in der Version "Bus und LKW" wird das Regelrohr (11) durch ein Aufrollgehäuse für jedes seitliche Kabel (9) ersetzt. Bei Zwillingsrädern wird zusätzlich zu den Stäben (8) eine Falzung in V-Form auf den Verbindungsblechen (1) zwischen den beiden Rädern ausgeführt. Ein drallfreies Kabel verläuft am Boden des V in jedem Blech (1).

11. Lauffläche nach Anspruch 1, **dadurch gekennzeichnet, daß** der Außendurchmesser der Kabel (9) auf den Innendurchmesser der Rohre (11) abgestimmt ist, deren Regellängen vorne und hinten die Montage auf Räder mit sehr unterschiedlichen Durchmessern und Breiten zulassen.

12. Lauffläche nach den Ansprüchen 1, 10 oder 11, **dadurch gekennzeichnet, daß** zwei Rohre (11) ein Ende in Form einer Aufnahme (14) für Haken (15) besitzen, die am Ende der beiden anderen Rohre (11) befestigt werden. Der "vordere" Haken (15) ist in einem geschmeidigen nicht remanenten Material (16) eingebettet.

13. Lauffläche nach Anspruch 1, **dadurch gekennzeichnet, daß** die Elemente (1) außer an ihren Enden von einem "belasteten" abgeformten, karierten Kautschuk umhüllt sind.
